# FASCICULE DE BREVET EUROPEEN

(11) **EP 0 521 798 B1**
(45) Date de publication et mention de la délivrance du brevet: **03.01.1996**
(21) Numéro de dépôt: 92401923.5
(22) Date de dépôt: 03.07.1992
(51) Int. Cl.: F16M 13/00, B21D 11/08, H02K 5/00

(54) **Support métallique perfectionné, procédé pour sa confection et son application aux moteurs électriques**
Metallisches Gestell, Herstellungsverfahren dafür und seine Verwendung bei elektrischen Motoren
Metallic support, methods for its manufacturing and its use to electric motors

(30) Priorité: 05.07.1991 FR 9108478
(43) Date de publication de la demande: 07.01.1993
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 074 785
- DE-A- 2 263 985
- DE-A- 3 319 787
- GB-A- 1 585 544
- US-A- 3 636 690

## Description

La présente invention concerne le travail des tôles métalliques et, plus particulièrement, les techniques de fabrication de supports métalliques en tôle emboutie constitués de deux branches longilignes réunies à l'une de leurs extrémités par un coude et munies éventuellement de raidisseurs pour en augmenter le moment, du type de ceux qui sont par exemple utilisés couramment pour des moteurs électriques d'automobiles.

Les moteurs électriques sont d'un usage courant à bord des véhicules automobiles. Ce sont eux, par exemple, qui meuvent les groupes moto-ventilateurs du système de refroidissement du moteur thermique d'entraînement ou du système de climatisation de l'habitacle.

Il est courant de fabriquer de tels supports à partir d'une tôle métallique dans laquelle on découpe des flans de géométrie appropriée que l'on munit le plus souvent de raidisseurs pour en augmenter le moment. Lorsque de tels supports sont constitués de deux branches longilignes réunies à l'une de leurs extrémités par un coude et qu'ils ont une configuration en V plus ou moins ouvert, les techniques utilisées conduisent à des chutes importantes de matière qui grèvent les coûts de production.

Une technique est proposée par le document GB 1 585 544 qui concerne la fabrication de boîtiers métalliques pour machines à laver le linge ou aux autres équipements ménagers. Un tel boîtier en tôle qui comprend des faces contiguës qui sont munies chacune d'un rebord en équerre et qui sont jointes par une arête, est fait de telle manière que dans l'angle le rebord continu est déformé en pli saillant triangulaire.

Le but de l'invention est de remédier à ce type de difficulté.

L'invention a pour objet un support métallique en tôle emboutie constitué de deux branches longilignes réunies à l'une de leurs extrémités et munies de préférence de raidisseurs pour en augmenter le moment. Ce support est remarquable en ce que ses deux branches sont obliques relativement l'une à l'autre pour former un V et sont réunies par un coude qui est le sommet de ce V, en ce que ce coude comprend au moins un pli avec deux jambes triangulaires qui sont réunies, d'une part, entre elles par un pont et, d'autre part, au coude par un pied, en ce que pli est en saillie sur ce coude et en ce que sa hauteur va décroissant dans le sens de la divergence du V.

L'invention a aussi pour objet un procédé pour la confection d'un support métallique en tôle emboutie constitué de deux branches longilignes réunies àl'une de leurs extrémités par un coude, munies de préférence de raidisseurs pour en augmenter le moment et conformées en un V dont le coude est le sommet, et selon lequel on découpe un flan en U dont les deux branches sont pratiquement parallèles et très proches et réunies par le coude, on emboutit le coude pour y former au moins un pli saillant avec deux jambes triangulaires dont la hauteur va décroissant dans le sens de la divergence du V.

L'invention porte aussi sur l'application d'un tel support aux moteurs électriques notamment d'automobiles.

D'autres caractéristiques de l'invention ressortiront de la lecture de la description et des revendications qui suivent ainsi que de l'examen du dessin annexé, donné seulement à titre d'exemple, où :
- la Figure 1 est une vue en élévation d'un flan en tôle au cours du processus de fabrication selon l'invention;
- la Figure 2 est une vue analogue à celle de la Figure 1 à un autre stade de production;
- la Figure 3 est une section droite perpendiculaire au plan bissecteur du coude du support;
- la Figure 4 est une vue analogue à celle de la Figure 2 d'un autre mode de réalisation; et
- la Figure 5 est une section analogue à celle de la Figure 3 du mode de réalisation de la Figure 4.

Les techniques de travail des tôles pour en obtenir des flans qui sont soumis à des opérations ultérieures d'emboutissage, de découpe, de perçage, de pliage, etc étant bien connues dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on identifie toujours par un même numéro de référence un élément homologue quel que soit le mode de la réalisation.

Comme on le voit en examinant les diverses figures du dessin, un support 10 métallique en tôle emboutie selon l'invention est constitué de deux branches 11, longilignes, qui sont réunies à l'une de leurs extrémités 111 par un coude 12. Ces deux branches 11 sont obliques relativement l'une à l'autre pour former un V dont le coude 12 est le sommet.

Ce coude 12 comprend au moins un pli 20 avec deux jambes 21 triangulaires qui sont réunies, d'une part, entre elles par un pont 22 et, d'autre part, au coude 12 chacune par un pied 23. Comme on peut l'observer, ce pli 20 est en saillie sur le coude 12 et sa hauteur va décroissant dans le sens de la divergence du V.

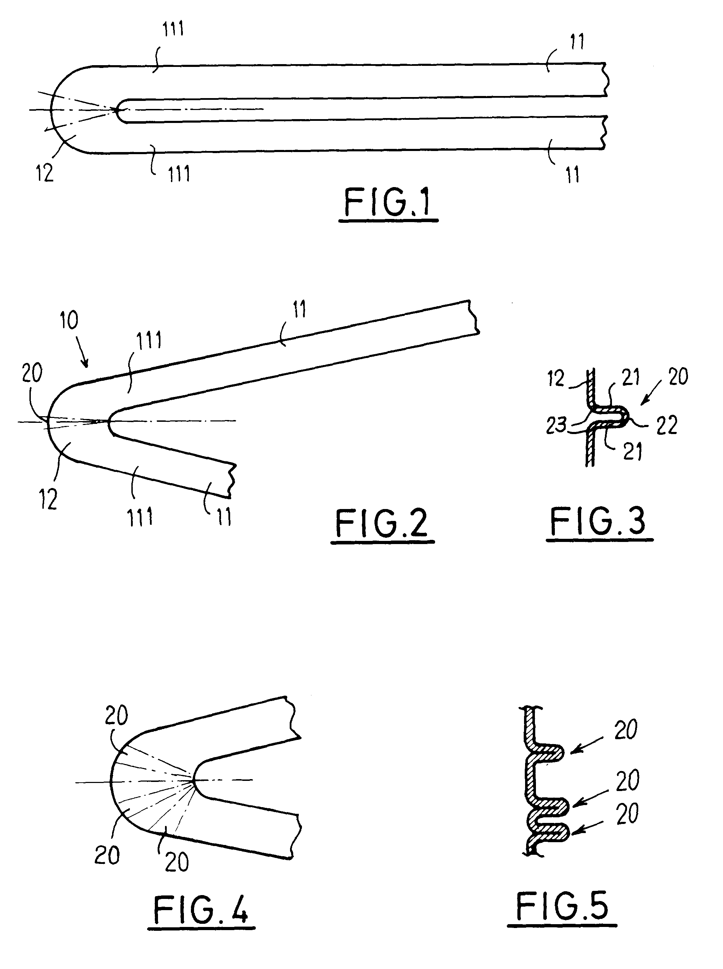

Les jambes 21 du pli 20 sont parallèles (Figure 3) et de préférence jointives (Figure 5).

S'il y a lieu les jambes 21 sont fixées l'une à l'autre notamment par soudure par points.

Lorsqu'on part de l'état du flan de la Figure 1 pour arriver à celui qui est illustré sur la Figure 2 ou 4, il est clair que l'importance des jambes triangulaires est fonction de l'ouverture du V des branches longilignes du support. Plus la divergence ou l'ouverture du V est importante, plus la hauteur de la saillie du pli par rapport au plan du flan ou des branches est importante.

Lorsque pour des raisons d'emcombrement, il faut amoindrir l'importance de cette saillie, on utilise alors plusieurs plis de préférence rayonnant comme illustré sur les Figures 4 et 5. Ces plis peuvent être régulièrement répartis ou non et cela d'une manière symétrique ou non.

Il est clair que lorsqu'on utilise plusieurs plis, ceux-ci peuvent être répartis sur les deux faces du flan et non pas sur une seule de celles-ci, comme illustré.

Les raidisseurs dont est de préférence muni le support métallique pour en augmenter le moment, sont par exemple constitués par des rebords ménagés au long de l'un au moins des côtés des branches par pliage à angle droit sur une face ou sur les deux. Lorsque deux rebords sont ménagés sur une même face, les branches ont en section droite l'allure d'une gouttière.

Pour confectionner un support métallique du type que l'on vient de décrire, on découpe un flan en U dont les deux branches sont pratiquement parallèles et très proches, et réunies par le coude comme illustré sur la Figure 1. On emboutit le coude pour y former au moins un pli saillant avec deux jambes triangulaires dont la hauteur va décroissant dans le sens de la divergence. S'il y a lieu, on rapproche à les faire se toucher les jambes du pli et éventuellement on les soude par points. Il est clair que suivant les machines et l'outillage dont on dispose, la découpe et l'emboutissage peuvent être conduits en une seule opération, éventuellement simultanément à d'autres.

Un support métallique selon l'invention trouve notamment une application pour le montage des moteurs électriques utilisés par exemple à bord des automobiles.

## Revendications

1. Support (10) métallique en tôle emboutie constitué de deux branches (11) longilignes réunies à l'une (111) de leurs extrémités et munies de préférence de raidisseurs pour en augmenter le moment, support dans lequel ces deux branches (11) sont obliques relativement l'une à l'autre pour former un V et sont réunies par un coude (12) qui est le sommet de ce V, ce coude (12) comprend au moins un pli (20) avec deux jambes (21) triangulaires qui sont réunies, d'une part, entre elles par un pont (22) et, d'autre part, au coude par un pied (23), ce pli (20) est en saillie sur ce coude (12) et sa hauteur va décroissant dans le sens de la divergence du V.

2. Support selon la revendication 1, caractérisé en ce que les jambes (21) du pli (20) sont parallèles.

3. Support selon la revendication 2, caractérisé en ce que les jambes (21) sont jointives.

4. Support selon la revendication 3, caractérisé en ce que les jambes (21) sont fixées l'une à l'autre notamment par soudure par points.

5. Support selon l'une quelconque des revendications 1 à 4, caractérisé en ce que le coude (12) comprend plusieurs plis (20) rayonnant.

6. Support selon la revendication 5, caractérisé en ce que les plis sont équidistants.

7. Procédé pour la confection d'un support métallique en tôle emboutie selon l'une quelconque des revendications 1 à 6, constitué de deux branches longilignes réunies à l'une de leurs extrémités par un coude, munies de préférence de raidisseurs pour en augmenter le moment et conformées en un V dont le coude est le sommet, et selon lequel on découpe un flan en U dont les deux branches sont pratiquement parallèles et très proches et réunies par le coude, on emboutit le coude pour y former au moins un pli saillant avec deux jambes triangulaires dont la hauteur va décroissant dans le sens de la divergence du V.

8. Procédé selon la revendication 7, caractérisé en ce qu'on soude par points les jambes pour les fixer l'une à l'autre.

9. Application d'un support selon l'une des revendications précédentes aux moteurs électriques notamment d'automobiles.

## Patentansprüche

1. Metallisches Gestell (10) aus getriebenem Blech, das aus zwei langgestreckten Schenkeln (11) besteht, die an einem (111) ihrer Enden verbunden und bevorzugt mit Versteifungen versehen sind, um ihr Moment zu erhöhen, wobei bei dem Gestell diese beiden Schenkel (11) schräg relativ zueinander liegen, um ein V zu bilden, und durch ein Winkelstück (12) verbunden sind, das die Spitze dieses V ist, wobei dieses Winkelstück (12) wenigstens eine Faltung (20) mit zwei dreieckförmigen Beinen (21) aufweist, die einerseits untereinander durch eine Brücke (22) und andererseits mit dem Winkelstück durch einen Fuß (23) verbunden sind, wobei die Faltung (20) auf dem Winkelstück (12) hervorsteht und seine Höhe in der Richtung des Auseinanderlaufens des V abnehmend verläuft.

2. Gestell nach Anspruch 1, dadurch gekennzeichnet, daß die Beine (21) der Faltung (20) parallel sind.

3. Gestell nach Anspruch 2, dadurch gekennzeichnet, daß die Beine (21) aneinanderliegen.

4. Gestell nach Anspruch 3, dadurch gekennzeichnet, daß die Beine (21) aneinander befestigt sind, insbesondere durch Punktschweißen.

5. Gestell nach einem der Ansprüche 1 bis 4, dadurch gekennzeichnet, daß das Winkelstück (12) mehrere auseinanderstrahlende Faltungen (20) aufweist.

6. Gestell nach Anspruch 5, dadurch gekennzeichnet, daß die Faltungen gleiche Abstände haben.

7. Verfahren zur Herstellung eines metallischen Gestells aus getriebenem Blech nach einem der Ansprüche 1 bis 6, das aus zwei langgestreckten Schenkeln besteht, welche an einem ihrer Enden durch ein Winkelstück verbunden sind, bevorzugt mit Versteifungen versehen, um ihr Moment zu erhöhen, und einem V entsprechend, wobei das Winkelstück die Spitze ist, und gemäß dem man einen U-Ausschnitt schneidet, dessen beide Schenkel praktisch parallel sind und sehr nahe liegen und durch das Winkelstück verbunden sind, man das Winkelstück treibt, um dort wenigstens eine Faltung zu bilden, die mit zwei dreieckförmigen Beinen hervorsteht, deren Höhe in der Richtung des Auseinanderlaufens des V abnehmend verläuft.

8. Verfahren nach Anspruch 7, dadurch gekennzeichnet, daß man die Beine punktschweißt, um sie aneinander zu befestigen.

9. Anwendung eines Gestells nach einem der vorangehenden Ansprüche bei elektrischen Motoren, insbesondere bei Kraftfahrzeugen.

## Claims

1. A metal support (10) made of shaped sheet metal, comprising two elongate arms (11) joined at one (111) of their ends and preferably provided with stiffeners to increase the moment, wherein the two arms (11) are arranged at an angle to one another to form a V and are joined by an elbow (12) forming the point of the V, the elbow (12) comprises at least one fold (20) having two triangular members (21) which, firstly, are interconnected by a bridge (22) and, secondly, are connected to the elbow by a foot (23), the fold (20) projects from the elbow (12) and its height decreases in the direction of divergence of the V.

2. A support according to claim 1, characterised in that the members (21) of the fold (20) are parallel.

3. A support according to claim 2, characterised in that the members (21) are contiguous.

4. A support according to claim 3, characterised in that the members (21) are fixed together, in particular by spot welding.

5. A support according to any one of claims 1 to 4, characterised in that the elbow (12) comprises a plurality of radiating folds (20).

6. A support according to claim 5, characterised in that the folds are equidistant.

7. A method of manufacturing a metal support made of shaped sheet metal according to any one of claims 1 to 6, comprising two elongate arms joined at one of their ends by an elbow, preferably provided with stiffeners to increase the moment and being in the form of a V, the point of which is formed by the elbow, a method wherein a blank is stamped into a U, the two arms of which are practically parallel and very close and joined by the elbow, and the elbow is shaped to form at least one projecting fold having two triangular members, the height of which decreases in the direction of divergence of the V.

8. A method according to claim 7, characterised in that the members are spot welded to fix them together.

9. A use of a support, according to one of the preceding claims, in electric motors, in motorcars in particular.
